Europäisches Patentamt

European Patent Office

Office européen des brevets

(11) Publication number: **0 184 414 B1**

(12) # EUROPEAN PATENT SPECIFICATION

(45) Date of publication of patent specification: **20.02.91**   (51) Int. Cl.⁵: **C02F 5/10, C02F 5/12, C02F 5/14**

(21) Application number: **85308751.8**

(22) Date of filing: **02.12.85**

(54) **Compositions for controlling alkaline-earth metal scales.**

(30) Priority: **03.12.84 US 677660**

(43) Date of publication of application:
**11.06.86 Bulletin 86/24**

(45) Publication of the grant of the patent:
**20.02.91 Bulletin 91/08**

(84) Designated Contracting States:
**AT BE CH DE FR GB IT LI LU NL SE**

(56) References cited:
**EP-A- 0 122 013**
**GB-A- 1 519 512**
**US-A- 4 118 318**
**US-A- 4 168 230**
**US-A- 4 324 664**

(73) Proprietor: **CALGON CORPORATION**
**Route 60-Campbell's Run Road**
**Robinson Township Pennsylvania 15205(US)**

(72) Inventor: **Yorke, Monica A.**
**1408 State Avenue**
**Coraopolis Pennsylvania 15108(US)**

(74) Representative: **Crampton, Keith John Allen et al**
**D. YOUNG & CO. 10 Staple Inn**
**London WC1V 7RD(GB)**

EP 0 184 414 B1

## Description

Most commercial water contains alkaline earth metal cations, such as those of calcium and magnesium, and anions such as carbonate, sulphate and phosphate. When combinations of these anions and cations are present in concentrations that cause the solubility products of the corresponding salts to be exceeded, precipitates form until these concentrations are no longer exceeded. These precipitates are alkaline-earth metal scales. For example, when the concentrations of calcium ion and the above mentioned anions are such that the solubility product of calcium-anion reaction product is exceeded, a solid phase of calcium scale will form as a precipitate.

Solubility product concentrations are exceeded for various reasons, such as evaporation of the water phase, change in pH, pressure, or temperature, and the introduction of additional ions that can form insoluble compounds with the ions already present in the solution.

As these reaction products are precipitated on heat-transfer surfaces in contact with aqueous streams, they accumulate as scale. The scale prevents effective heat transfer, interferes with fluid flow, facilitates corrosive processes, and harbours bacteria. Scale is an expensive problem in many industrial water systems, causing delays and shutdowns for cleaning and removal. Alkaline-earth metal scales commonly form on the metallic surfaces of apparatuses used for thermal treatment of aqueous solutions and suspensions. The term alkaline-earth metal scales includes, but is not limited to, calcium carbonate, magnesium carbonate, calcium phosphate and calcium sulphate. These scales form frequently in the tubes in heat exchangers and on other heat-exchange surfaces.

In the past, alkaline-earth metal scale inhibition has been facilitated by the use of anionic polyelectrolytes such as polyacrylates, polymaleic anhydrides, copolymers of acrylates and sulphonates, and polymers of sulphonated styrenes. However, when used as threshold alkaline-earth metal scale inhibitors, large dosages of these polymers are required. These high dosages in turn increase operating costs.

The need therefore exists for an inexpensive and efficient method and composition for inhibiting the formation of alkaline-earth metal scales, especially calcium and magnesium scales, on metallic surfaces in contact with water. Scale formation can be prevented by inactivating either cations or anions by chemical means with chelating or sequestering agents, so that the solubility product of the scale-forming material is not exceeded. Polyelectrolytes, in combination with anionic surfactants, synergistically control alkaline-earth metal scale precipitation, especially calcium carbonate precipitation.

U.S. Patents US-A-4,427,568 and US-A-4,324,664 disclose the use of acrylic acid/alkylhydroxy acrylate copolymers with water-soluble esters of aliphatic sulphodicarboxylic acid to control scales.

U.K. Patent GB-A-1,519,512 discloses a method of inhibiting the deposition of alkaline-earth metal scales in aqueous systems using a composition comprising an anionic polyelectrolyte and an anionic surfactant in which the weight ratio of the anionic polyelectrolyte to anionic surfactant is in the range from 400:1 to 1:100.

European Patent Specification EP-A-0,122,013 discloses an admixture comprising a water-soluble polymer of molecular weight less than 25,000, an unsaturated monocarboxylic acid such as acrylic or methacrylic acid and an unsaturated sulphonic acid such as 2-acrylamido-2-methylpropylsulphonic acid or a salt thereof, and its use in inhibiting scale formation in aqueous systems.

The present invention provides a method of inhibiting the precipitation and deposition of alkaline-earth metal scales in an aqueous system, comprising adding to the system (a) a water-soluble anionic polyelectrolyte that is a polymer containing from 95 to 25 mole percent of acrylic acid and/or methacrylic acid and from 5 to 75 mole percent of 2-acrylamido-2-methylpropylsulphonic acid, or a salt of such a polymer; and (b) an anionic surfactant that is octylphenoxy polyethyoxy ethyl phosphate or a sodium or potassium salt thereof, in which the ratio by weight of the anionic polyelectrolyte to the anionic surfactant is in the range 50:1 to 1:5 and the molecular weight of the anionic polyelectrolyte is in the range 1,000 to 20,000, as determined by light scattering techniques. The invention also provides a composition for use in inhibiting scale precipitation comprising a water-soluble anionic polyelectrolyte and an anionic surfactant as defined above and in the above ratios. The method and composition of the invention have been found effective over a wide pH range, and are especially effective with respect to calcium carbonate scale.

An effective amount of the scale-inhibiting admixtures of the invention is that level of the inhibiting admixture, or of each component separately, necessary to prevent precipitation of calcium scales in the system being treated. Treatment levels can be from 0.1 ppm to as high as 1,000 ppm or above, based on the weight of the aqueous system being treated. The preferred treatement level is from 0.1 to 100 ppm.

Unexpectedly, the scale-inhibiting admixtures of the invention prevent precipitation of alkaline-earth metal scales, especially calcium scales such as calcium carbonate, more effectively than either the polyelectrolyte or the surfactant alone. Thus, due to this synergism, such compositions are improved products in scale inhibition. The compositions and process of the invention can be used in any cooling water application where threshold inhibition of water-borne calcium scales is desired.

Though it is preferred that compositions or admixtures be added to aqueous systems, the polyelectrolytes and surfactants of the invention can be added separately to accomplish the desired inhibition without departing from the invention.

EXAMPLES

The following non-limiting examples illustrate the present invention in greater detail, and include comparative data including either no surfactant or no polyelectrolyte.

In the Examples, the polyelectrolyte used is AA/AMPS, which is a copolymer of acrylic acid and 2-acrylamido-2-methylpropylsulphonic acid having a weight average molecular weight of about 8,200, as determined by low angle laser light scattering, and the surfactant is Triton H-66, which is octylphenoxypolyethoxythylphosphate, and is available from Rohm & Haas Company.

The following Examples show the results of stagnant flask tests. For test run at pH 8.0, bicarbonate solution was added to a flask containing distilled water. Inhibitor, i.e. surfactant and/or polyelectrolyte, was added. A calcium solution was then pipetted into the flask. After swirling to mix, pH was monitored and the flask was stoppered and stored in an oven for 24 hours at $60^\circ$C. A portion was then removed from the flask, filtered and titrated for calcium content, to determine percent inhibition.

For each test at pH = 8.0, 200 ppm Ca++ and 600 ppm $HCO_3$- were present.

For tests run at pH 9.0, 250 ppm $Ca^{+2}$, 88 ppm $CO_3$= and 512 ppm $HCO_3$- were present. In these tests, the flasks were stoppered and stored at $55^\circ$C in an oven for 24 hours.

EXAMPLES 1-4

Calcium carbonate inhibition at pH 8.0 was measured at a 0.5 ppm dosage (based on total additives) using AA/AMPS and Triton H-66. These results are shown in Table 1 below.

In the "weight ratio" columns in all the tables, 1:0 implies that no surfactant was present and 0:1 that no polyelectrolyte was present, the relevant Examples in either case (1, 2, 5 to 12 and 18 to 23) being comparative.

TABLE 1

| Example Number | Weight Ratio Polyelectrolyte : Surfactant | Percentage Inhibition |
|---|---|---|
| 1 | 1:0 | 50 |
| 2* | 0:1 | 4 |
| 3 | 13:1 | 73 |
| 4 | 40:1 | 72 |

\* Two separate tests were carried out for example 2; the inhibition value shown is an average.

EXAMPLES 5-17

Calcium carbonate inhibition at pH 8.0 was measured at various dosages (based on the total additive) using AA/AMPS with Triton H-66. Results are shown in table 2, below.

3

## TABLE 2

| Example Number | Weight Ratio Polyelectrolyte : Surfactant | Dosage ppm | Percentage Inhibition |
|---|---|---|---|
| 5 | 1:0 | .25 | 42 |
| 6 | 1:0 | 1.0 | 68 |
| 7 | 1:0 | 2.0 | 79 |
| 8 | 1:0 | 4.0 | 82 |
| 9 | 1:0 | 8.0 | 100 |
| 10 | 0:1 | .25 | 4 |
| 11 | 0:1 | .5 | 12 |
| 12 | 0:1 | 1.0 | 11 |
| 13 | 13:1 | 0.5 | 71 |
| 14 | 13:1 | 1.0 | 75 |
| 15 | 13:1 | 2.0 | 100 |
| 16 | 13:1 | 4.0 | 88 |
| 17 | 13:1 | 6.0 | 100 |

EXAMPLES 18-31

Calcium carbonate inhibition at pH 9.0 was measured at several dosages (based on total additives) using the same polyelectrolyte and surfactant as in the preceding Examples. In Table 3, ratios are weight ratios.

EP 0 184 414 B1

## TABLE 3

| Example Number | Weight Ratio Polyelectrolyte : Surfactant | Dosage ppm | Percentage Inhibition |
|---|---|---|---|
| 18 | 1:0 | 5 | 36 |
| 19 | 1:0 | 10 | 36 |
| 20 | 1:0 | 20 | 48 |
| 21 | 1:0 | 30 | 56 |
| 22 | 1:0 | 40 | 56 |
| 23 | 1:0 | 50 | 57 |
| 24 | 5:1 | 5 | 49 |
| 25 | 5:1 | 10 | 51 |
| 26 | 5:1 | 20 | 58 |
| 27 | 3:1 | 10 | 46 |
| 28 | 3:1 | 20 | 57 |
| 29 | 1:5 | 5 | 46 |
| 30 | 1:5 | 10 | 58 |
| 31 | 1:5 | 20 | 60 |

## Claims

1. A method of inhibiting the precipitation and deposition of alkaline-earth metal scales in an aqueous system comprising adding to the system (a) a water-soluble anionic polyelectrolyte with a molecular weight in the range 1,000 to 20,000, that is a polymer containing from 95 to 25 mole percent of acrylic acid and/or methacrylic acid and from 5 to 75 mole percent of 2-acrylamido-2-methylpropylsulphonic acid, or a salt of such a polymer; and (b) an anionic surfactant that is octylphenoxy polyethoxy ethyl phosphate or a sodium or potassium salt thereof, in which the ratio by weight of the anionic polyelectrolyte to the anionic surfactant is in the range 50:1 to 1:5.

2. A method as claimed in Claim 1, in which the amounts of electrolyte and surfactant total from 0.1 to 1000 ppm, based on the weight of the aqueous sytem.

3. A method as claimed in Claim 2, in which the said amounts total from 1.0 to 100.0 ppm.

4. A composition useful for inhibiting precipitation of alkaline-earth metal scales in aqueous systems comprising (a) a water-soluble anionic polyelectrolyte with a molecular weight in the range 1,000 to 20,000, that is a polymer containing from 95 to 25 mole percent of acrylic acid and/or methacrylic acid and from 5 to 75 mole percent of 2-acrylamido-2-methylpropylsulphonic acid, or a salt of such a polymer; and (b) an anionic surfactant that is octylphenoxy polyethoxy ethyl phosphate or a sodium or potassium salt thereof, in which the ratio by weight of the anionic polyelectrolyte to the anionic surfactant is in the range 50:1 to 1:5.

## Revendications

5

1. Procédé d'inhibition de la précipitation et du dépôt des tartres des métaux alcalino-terreux dans un système aqueux, qui comprend l'addition au système, (a) d'un polyélectrolyte anionique soluble dans l'eau, avec une masse moléculaire comprise dans l'intervalle allant de 1.000 à 20.000, qui est un polymère contenant de 95 à 25 pour-cent en moles d'acide acrylique et/ou d'acide méthacrylique et de 5 à 75 pour-cent en moles d'acide 2-acrylamido--2-méthylpropylsulfonique, ou un sel d'un tel polymère ; et (b) d'un agent tensio-actif anionique qui est l'octylphénoxy-polyéthoxy-é-thylphosphate ou un de ses sels de sodium ou de potassium, dans lequel le rapport pondéral du polyélectrolyte anionique à l'agent tensio-actif anionique est compris dans l'intervalle allant de 50 : 1 à 1 : 5.

2. Procédé selon la revendication 1, dans lequel les quantités de l'électrolyte et de l'agent tensio-actif totalisent de 0,1 à 1000 ppm, par rapport au poids du système aqueux.

3. Procédé selon la revendication 2, dans lequel lesdites quantités font un total allant de 1,0 à 100,0 ppm.

4. Composition utile pour l'inhibition de la précipitation des tartres de métaux alcalino-terreux dans les systèmes aqueux comprenant : (a) un polyélectrolyte anionique soluble dans l'eau, avec une masse moléculaire comprise dans l'intervalle allant de 1.000 à 20.000, qui est un polymère contenant de 95 à 25 pour-cent en moles d'acide acrylique et/ou d'acide méthacrylique et de 5 à 75 pour-cent en moles d'acide 2-acrylamido-2-méthylpropylsulfonique, ou un sel d'un tel polymère ; et (b) un agent tensio-actif anionique qui est l'octylphénoxy-polyéthoxy-éthylphosphate ou un de ses sels de sodium ou de potassium, dans laquelle le rapport pondéral du polyélectrolyte anionique à l'agent tensio-actif anionique est compris dans l'intervalle allant de 50 : 1 à 1 : 5.

**Ansprüche**

1. Verfahren zur Inhibierung der Ausfällung und Ablagerung von Kesselstein auf Erdalkalimetallbasis in einem wäßrigen System, umfassend das Zusetzen zu dem System von (a) einem wasserlöslichen anionischen Polyelektrolyten mit einem Molekulargewicht im Bereich von 1.000 bis 20.000, d. i. ein Polymer mit 95 bis 25 Mol-% Acrylsäure und/ oder Methacrylsäure und 5 bis 75 Mol-% 2-Acrylamido-2-methylpropylsulfonsäure oder ein Salz von solch einem Polymer; und von (b) einem anionischen grenzflächenaktiven Mittel, d. i. Octylphenoxypolyethoxyethylphosphat oder ein Natrium- oder Kaliumsalz hievon, wobei das Gewichtsverhältnis von anionischem Polyelektrolyten zum anionischen grenzflächenaktiven Mittel im Bereich von 50:1 bis 1:5 liegt.

2. Verfahren nach Anspruch 1, worin die Gesamtmengen von Elektrolyten und grenzflächenaktivem Mittel von 0,1 bis 1.000 ppm, bezogen auf das Gewicht des wäßrigen Systems, betragen.

3. Verfahren nach Anspruch 2, worin die genannten Gesamtmengen von 1,0 bis 100,0 ppm betragen.

4. Zusammensetzung, welche zur Inhibierung der Ausfällung von Kessel-stein auf Erdalkalimetallbasis in wäßrigen Systemen nützlich ist, umfassend (a) einen wasserlöslichen anionischen Polyelektrolyten mit einem Molekulargewicht im Bereich von 1.000 bis 20.000, d. i. ein Polymer mit 95 bis 25 Mol-% Acrylsäure und/oder Methacrylsäure und 5 bis 75 Mol-% 2-Acrylamido-2-methylpropylsulfonsäure oder ein Salz von solch einem Polymer; und (b) ein anionisches grenzflächenaktives Mittel, d. i. Octylphenoxypolyethoxyethylphosphat oder ein Natrium- oder Kaliumsalz hievon, worin das Gewichtsverhältnis von anionischem Polyelektrolyten zum anionischen grenzflächenaktiven Mittel im Bereich von 50:1 bis 1:5 beträgt.